# EUROPEAN PATENT APPLICATION

(11) **EP 2 506 116 A1**
(43) Date of publication of application: **03.10.2012**
(21) Application number: 10832789.1
(22) Date of filing: 05.10.2010
(51) Int. Cl.: G06F 1/32, G06F 1/28, H04M 1/73

(54) **REDUCED POWER CONSUMPTION NOTIFICATION SYSTEM, TERMINAL DEVICE, METHOD, AND PROGRAM**

(30) Priority: 27.11.2009 JP 2009269863
(71) Applicant: NEC Corporation, Tokyo 108-8001 (JP)
(72) Inventor: TANAKA, Motoshi, Kodama-gun Saitama 367-0297 (JP)
(74) Representative: Vossius & Partner
(86) International application number: PCT/JP2010/005971
(87) International publication number: WO 2011/064933

(57) **Abstract**

A power saving notification system comprises: power saving possibility judgment means which judges whether electric power saving is possible in a prescribed function of a terminal device compared to a current setting value of the function or not based on operation history information on the terminal device; and notification means which notifies the user of the result of the judgment when the power saving possibility judgment means judges that electric power saving is possible.

## Description

### Technical Field

The present invention relates to a power saving notification system for supporting electric power saving of a terminal device, a terminal device, a power saving notification method, and a power saving notification program.

### Background Art

In recent years, some of terminal devices (cellular phones, etc.) are equipped with a power saving function such as the ECO mode and the power saving mode.

As a related technology, Patent Document 1 has described a system which generates an advice message for appropriate operation of electric instruments in a house based on the operating status of the electric instruments and notifies the user of the advice message.

### Citation List

### Patent Literature

Patent Document 1: JP-A-2008-136334

### Summary of Invention

### Technical Problem

However, in the general power saving functions of terminal devices, the settings have to be made on the user's own initiative. Thus, when the user keeps on operating the terminal device without noticing the power saving function, no power saving can be achieved as a result. In such cases, providing terminal devices with the power saving function is almost useless and meaningless.

Further, the system described in the Patent Document 1 just attempts to reduce the electricity charges, etc. by reconsidering the operation of each of the electric instruments. Therefore, it is impossible to configure a single terminal device to achieve electric power saving by directly employing the technology of the Patent Document 1.

It is therefore the primary object of the present invention to provide a power saving notification system, a terminal device, a power saving notification method, and a power saving notification program capable of notifying the user of settings allowing for electric power saving.

### Solution to Problem

A power saving notification system in accordance with the present invention comprises: power saving possibility judgment means which judges whether electric power saving is possible in a prescribed function of a terminal device compared to a current setting value of the function or not based on operation history information on the terminal device; and notification means which notifies the user of the result of the judgment when the power saving possibility judgment means judges that electric power saving is possible.

A terminal device in accordance with the present invention comprises: power saving possibility judgment means which judges whether electric power saving is possible in a prescribed function of the terminal device compared to a current setting value of the function or not based on operation history information; and notification means which notifies the user of the result of the judgment when the power saving possibility judgment means judges that electric power saving is possible.

A power saving notification method in accordance with the present invention comprises: judging whether electric power saving is possible in a prescribed function of a terminal device compared to a current setting value of the function or not based on operation history information on the terminal device; and notifying the user of the result of the judgment when electric power saving is judged to be possible.

A power saving notification program in accordance with the present invention causes a computer to execute: a power saving possibility judgment process of judging whether electric power saving is possible in a prescribed function of a terminal device compared to a current setting value of the function or not based on operation history information on the terminal device; and a notification process of notifying the user of the result of the judgment when electric power saving is judged to be possible in the power saving possibility judgment process.

### Advantageous Effects of the Invention

According to the present invention, it becomes possible to notify the user of settings allowing for electric power saving.

### Brief Description of Drawings

FIG. 1 It depicts a functional block diagram showing an example of the functional configuration of a power saving notification system in accordance with the present invention.
FIG. 2 It depicts a table showing an example of data stored in a terminal device.
FIG. 3 It depicts a flow chart showing an example of a process executed by the power saving notification system.
FIG. 4 It depicts an explanatory drawing showing an example of screen transition in the power saving notification system.
FIG. 5 It depicts a block diagram showing an example of the minimum configuration of the power saving notification system.

### Description of Embodiments

The present invention provides a terminal device having a function of determining setting values that are more capable of achieving electric power saving than the current setting values (setting values currently set by the user) based on history records (logs) of operations performed by the user in a prescribed period and notifying the user of the setting values. The present invention enables the terminal device to prompt the user to change the setting values to those more capable of achieving electric power saving. Thus, even when the user remains unconscious of the setting values leading to electric power saving in the daily use of the terminal device, it becomes possible to let the user notice a method for extending the duration of the battery.

Further, the terminal device notifies the user of only setting items allowing for electric power saving that are related to the operations recorded in the user's operation history records based on the operation history records stored in the terminal device. Therefore, even after the user has changed setting values to those capable of achieving electric power saving according to the notification, the user can use a new application, etc. (used by the user for the first time) with no restrictions on the displaying, operations, etc.

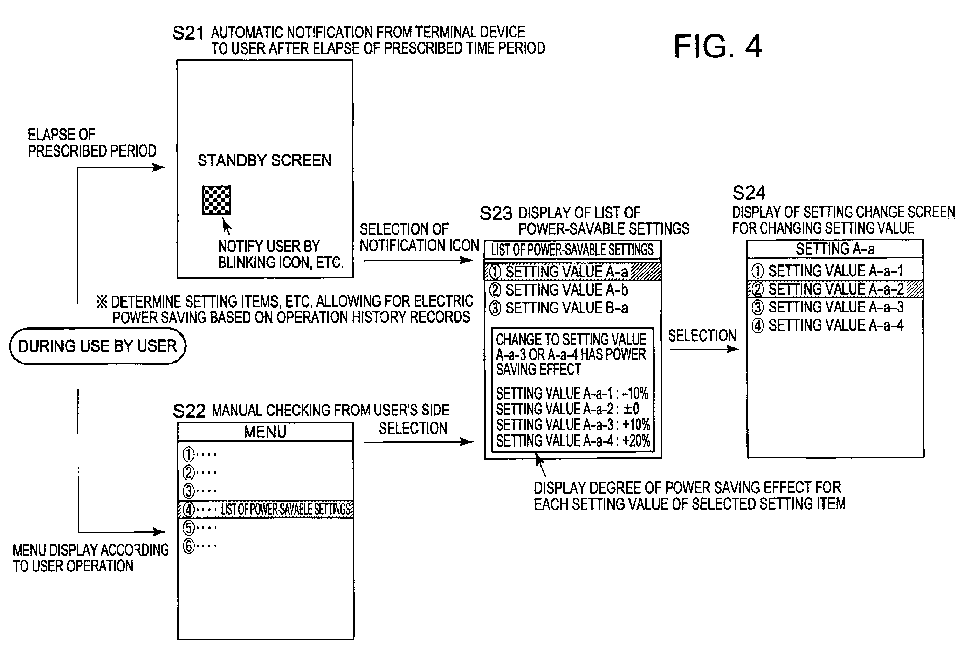

Two methods are assumed as means for letting the user check the setting values capable of achieving electric power saving: automatic notification from the terminal device to the user after the elapse of a prescribed time period (step S21 shown in FIG. 4) and manual checking from the user's side (step S22 shown in FIG. 4).

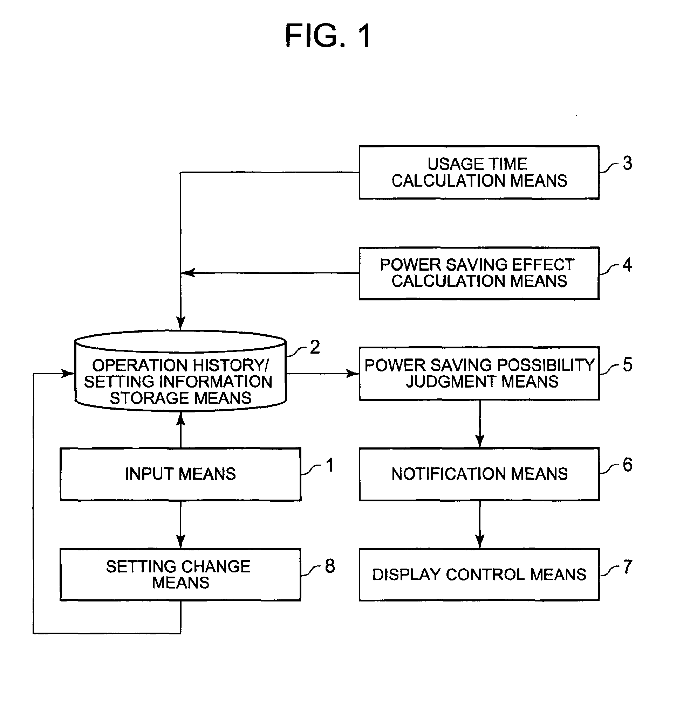

Referring now to the drawings, a description will be given in detail of an exemplary embodiment in accordance with the present invention. FIG. 1 is a functional block diagram showing an example of the functional configuration of a power saving notification system in accordance with the present invention. As shown in FIG. 1, the power saving notification system comprises input means 1, operation history/setting information storage means 2, usage time calculation means 3, power saving effect calculation means 4, power saving possibility judgment means 5, notification means 6, display control means 7, and setting change means 8. This exemplary embodiment will be described below by taking an example of a terminal device employing the power saving notification system. Specifically, the terminal device is implemented by a cellular phone, a PHS (Personal Handy-phone System) terminal, a personal computer, etc.

The input means 1 is implemented, specifically, by an input device such as a keyboard and a mouse. The input means 1 has a function of inputting data according to the operations by the user.

The operation history/setting information storage means 2 is implemented, specifically, by a storage device such as a magnetic disk device, an optical disk device or a memory. The operation history/setting information storage means 2 stores history records (logs) about the user operations on the terminal device, setting information on each function, etc. The information stored in the operation history/setting information storage means 2 will be described in more detail later in an explanation of a specific example.

The usage time calculation means 3 is implemented, specifically, by a CPU of an information processing device operating according to a program. The usage time calculation means 3 has a function of calculating the usage time of each function. For example, the usage time calculation means 3 stores the time at which the user started using a prescribed function (start time) in a storage unit and calculates the usage time upon the ending of the usage by comparing the present time with the stored time. Further, the usage time calculation means 3 stores the calculated usage time of each function in the operation history/setting information storage means 2. For example, the usage time calculation means 3 adds the calculated usage time to the usage time of the function stored in the operation history/setting information storage means 2 and thereby stores the sum as the cumulative usage time.

The power saving effect calculation means 4 is implemented, specifically, by a CPU of an information processing device operating according to a program. The power saving effect calculation means 4 has a function of calculating power saving effect of each setting value of each function. The power saving effect calculation means 4 also has a function of storing data representing the calculated power saving effect in the operation history/setting information storage means 2. For example, the power saving effect calculation means 4 calculates the power saving effect based on the usage time of each function stored in the operation history/setting information storage means 2 and electric power consumption per unit time which has previously been determined for each setting value of each function.

The power saving possibility judgment means 5 is implemented, specifically, by a CPU of an information processing device operating according to a program. The power saving possibility judgment means 5 judges whether electric power saving is possible or not based on the power saving effect calculated by the power saving effect calculation means 4.

The notification means 6 is implemented, specifically, by a CPU of an information processing device operating according to a program. The notification means 6 has a function of notifying the user that electric power saving is possible based on the result of the judgment by the power saving possibility judgment means 5. For example, in order to notify the user of the judgment result, the notification means 6 requests the display control means 7 to display prescribed information.

The display control means 7 is implemented, specifically, by a CPU of an information processing device operating according to a program. The display control means 7 has a function of controlling a display unit to make the unit display the prescribed information.

The setting change means 8 is implemented, specifically, by a CPU of an information processing device operating according to a program. The setting change means 8 has a function of changing the setting information of each function based on the data inputted by the input means 1. For example, the setting change means 8 has a function of updating the setting information of each function stored in the operation history/setting information storage means 2.

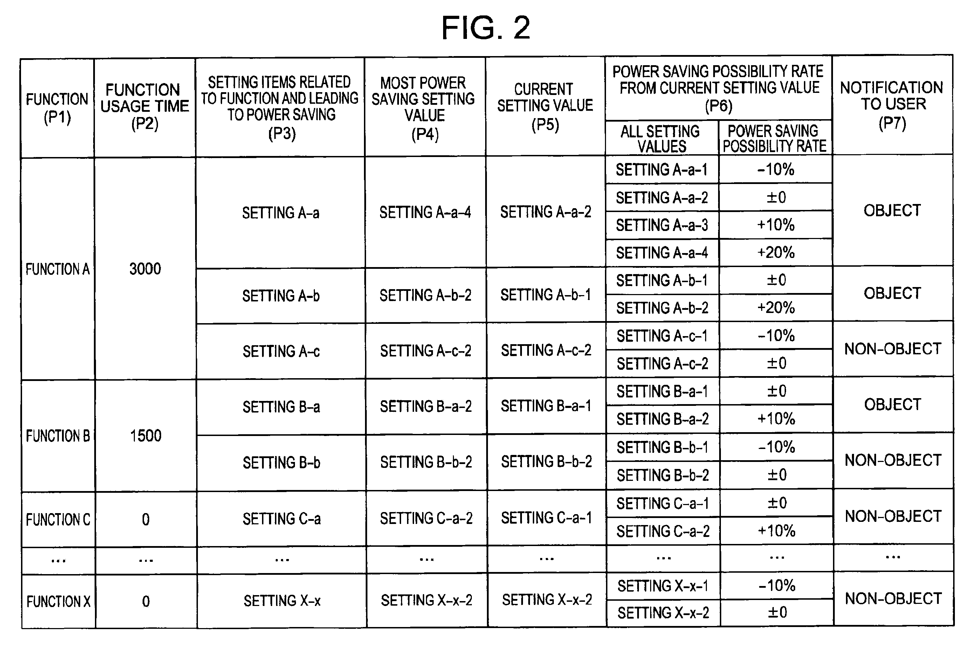

FIG. 2 is a table showing an example of data stored in the terminal device. Specifically, the operation history/setting information storage means 2 of the terminal device stores the data shown in FIG. 2.

As shown in FIG. 2, the operation history/setting information storage means 2 stores data P1 - P7. The data P1 represents each function of the terminal device available to the user. The functions of the terminal device may include a music playback function and an image display function, for example. The data P2 represents the usage time of each function by the user. The data P3 represents the names of setting items related to each function and leading to electric power saving. The data P4 represents a setting value that is the most capable of achieving electric power saving among various setting values of each setting item indicated by the data P3. The data P5 represents the current setting values of each function. The data P6 represents all the setting values that can be set for each setting item indicated by the data P3 (i.e., settable values) and a power saving possibility rate when the setting value of each setting item is changed from the current setting value (data P5) to each of the settable values. The data P7 represents whether or not each of the settable values should be regarded as an object of the notification to the user as a setting item allowing for electric power saving.

Among the items (data) stored in the operation history/setting information storage means 2, the data P1, P3 and P4 are fixed values in this exemplary embodiment. The data P2, P5, P6 and P7 are variables that vary depending on the status of usage by the user and the settings.

For the data P2, for example, the values are calculated and updated by the usage time calculation means 3. For the data P5, the values are updated by the setting change means 8. For the data P6, the power saving possibility rates are calculated and updated by the power saving effect calculation means 4. For the data P7, the values are updated based on the result of the judgment by the power saving possibility judgment means 5. The data P1, P3 and P4 (fixed values) are assumed to be previously stored in the operation history/setting information storage means 2.

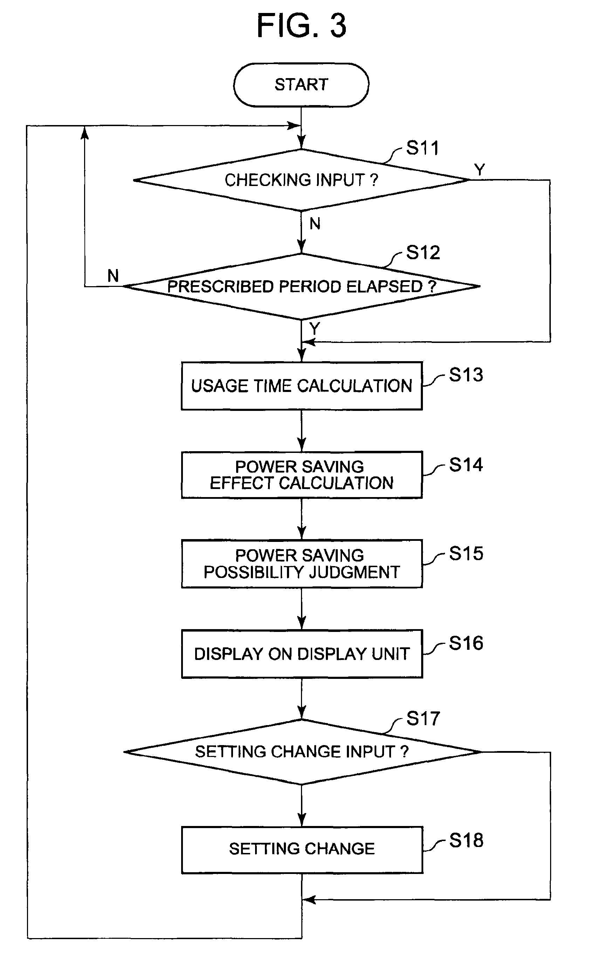

Next, the operation of the power saving notification system will be described below. FIG. 3 is a flow chart showing an example of a process executed by the power saving notification system.

When the user has performed a checking operation on the terminal device to check the settings allowing for electric power saving (Y in step S11) or when a prescribed time period has elapsed (Y in step S12) without the user's checking operation (N in step S11), the usage time calculation means 3 calculates the usage time (P2) of each function (P1) (step S13). For example, the usage time calculation means 3 calculates the cumulative usage time of each function from usage history information on each function stored in the storage unit.

Subsequently, the power saving effect calculation means 4 calculates the power saving possibility rate (POWER SAVING POSSIBILITY RATE in P6) for each setting value (ALL SETTING VALUES in P6) of each function based on the usage time (P2) calculated by the usage time calculation means 3 (step S14). For example, the power saving effect calculation means 4 calculates an expected power consumption for each setting value of a function based on the usage time of the function and the electric power consumption per unit time (previously determined for each setting value of the function) and then calculates the power saving possibility rate for each setting value by comparing the calculated expected power consumption with the expected power consumption at the current setting value. Incidentally, the process is not restricted to the above processing order. For example, it is also possible to execute the steps S13 and S14 with different timing (before the user operation, before a prescribed period, etc.) and thereby update the information stored in the operation history/setting information storage means 2.

Subsequently, the power saving possibility judgment means 5 judges whether electric power saving is possible or not in each function (step S15). A concrete method of the judgment will be explained later.

Subsequently, the notification means 6 executes a process of notifying the user that electric power saving is possible based on the result of the judgment by the power saving possibility judgment means 5.

For example, when the checking operation has been performed in the step S11, the notification means 6 requests the display control means 7 to display the judgment result. According to the request from the notification means 6, the display control means 7 executes control so that a list of settings allowing for electric power saving based on the judgment result is displayed on the display unit.

When the steps S13 - S15 have been executed due to the elapse of the prescribed time period in the step S12, the notification means 6 requests the display control means 7 to display a prescribed alarm, for example. According to the request from the notification means 6, the display control means 7 executes control so that the prescribed alarm (e.g., blinking icon) is displayed on the display unit.

With the above operation, the terminal device is capable of notifying the user that there exists a setting item allowing for electric power saving. When the user performs an operation on the terminal device to view the contents of the alarm displayed on the display unit, the display control means 7 executes control so that the list of settings allowing for electric power saving based on the judgment result is displayed on the display unit.

Subsequently, when the user after checking the contents of the notification performs a setting change operation on the terminal device for saving the electric power (step S17), the setting change means 8 changes the settings of the functions according to the operation by the user (step S18). Further, the setting change means 8 updates the current setting values (P5) stored in the operation history/setting information storage means 2 with the changed setting values. For example, the setting change means 8 may also be configured to automatically change the settings of multiple items collectively in response to one operation by the user.

Next, the method of the judgment in the step S15 on whether electric power saving is possible or not will be explained below. In this exemplary embodiment, when the power saving notification system notifies the user of the setting items allowing for electric power saving, items satisfying the following two conditions are regarded as the objects of the notification, in regard to the information representing whether each setting item should be regarded as an object of the notification or not (P7 in FIG. 2).

Condition 1: "The usage time (P2 in FIG. 2) of the function is not 0".

Condition 2: "The setting value that is the most capable of achieving electric power saving (P4 in FIG. 2) does not coincide with the current setting value (P5 in FIG. 2).

The condition 1 is a condition necessary for avoiding functional restriction for electric power saving, etc. (which is caused by a setting change) in regard to functions that have never been used. The condition 2 is a condition necessary for extracting only items having room for electric power saving. The condition 2 is employed since it is unnecessary to prompt the user to make a setting change if the current setting value is already the setting value most capable of achieving electric power saving.

In the example shown in FIG. 2, the above two conditions are satisfied by three items: "SETTING A-a", "SETTING A-b" and "SETTING B-a".

Thus, the power saving possibility judgment means 5 judges that the items "SETTING A-a", "SETTING A-b" and "SETTING B-a" allow for electric power saving.

Next, transition of screens in this exemplary embodiment will be explained referring to FIG. 4. FIG. 4 is an explanatory drawing showing an example of the screen transition in the power saving notification system.

In the example of FIG. 4, a case where the user has selected the icon displayed on the terminal device after the elapse of the prescribed time period (step S21 in FIG. 4) and a case where a menu (indicated as "LIST OF POWER-SAVABLE SETTINGS" in FIG. 4 as an example) has been selected by the user operation (step S22 in FIG. 4) are assumed. In this case, the terminal device displays the names of setting items, for which the data P7 in FIG. 2 (representing whether or not each setting item should be regarded as an object of the notification as a setting item allowing for electric power saving) has been set as "OBJECT", on the display unit as the list of power-savable settings.

When the user performs an operation for placing the cursor on one of the displayed setting item names, the terminal device displays data representing the power saving possibility rates from the current setting value (P6 in FIG. 2) as guidance (step S23 in FIG. 4) in order to clearly show the user how much power saving effect each setting value of the setting item has.

Thereafter, when the user performs an operation for selecting an item (whose setting value should be changed) from the list of power-savable settings, the terminal device displays the setting values selectable for the selected item on the display unit (step S24 in FIG. 4).

As described above, in this exemplary embodiment, the power saving notification system calculates the power saving possibility rate based on the operation history records of the user and thereby judges whether electric power saving is possible or not in regard to each setting value of each function. When electric power saving is judged to be possible, the power saving notification system notifies the user of the fact. Therefore, the following effects are achieved by this exemplary embodiment:

Even when the user is using the terminal device in his/her daily life without being aware of the status of the current setting values, the terminal device notifies the user of the setting items allowing for electric power saving. This makes it possible to let the user recognize the existence of a method for extending the duration (operating time) of the battery and prompt the user to make a setting change.

When the power saving mode is ON, due to the functional restrictions for electric power saving, the terminal device can keep on being used without exhibiting excellent functions and entertainment of recent terminal devices to the user for a long time. As a countermeasure against this problem, the terminal device notifies the user of the power-savable settings (settings allowing for electric power saving) related to the operations by the user based on the user's operation history records stored in the terminal device. Therefore, even after making a setting change, the user can use a new application, etc. (used by the user for the first time) with no restrictions on the displaying, operations, etc.

Further, when the user hopes to extend the duration of the battery (e.g., when the remaining battery charge is low), the user can check and recognize which setting has the power saving effect of the setting change on the user's own initiative.

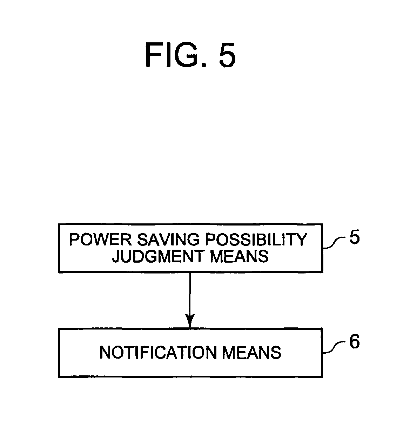

Next, the minimum configuration of the power saving notification system in accordance with the present invention will be described. FIG. 5 is a block diagram showing an example of the minimum configuration of the power saving notification system. As shown in FIG. 5, the power saving notification system comprises power saving possibility judgment means 5 and notification means 6 as its minimum configuration components.

In the power saving notification system in the minimum configuration shown in FIG. 5, the power saving possibility judgment means 5 judges whether electric power saving is possible in each function of a terminal device compared to a current setting value of the function or not based on operation history information on the terminal device. The notification means 6 notifies the user of the result of the judgment when the power saving possibility judgment means 5 judges that electric power saving is possible. Thus, with the power saving notification system in the minimum configuration, it is possible to notify the user of settings allowing for electric power saving.

The following characteristic configurations (1) - (7) of the power saving notification system have been illustrated in this exemplary embodiment:

(1) A power saving notification system comprising: power saving possibility judgment means (implemented by the power saving possibility judgment means 5, for example) which judges whether electric power saving is possible in a prescribed function of a terminal device (e.g., P1 shown in FIG. 2) compared to a current setting value of the function (e.g., P5 shown in FIG. 2) or not based on operation history information on the terminal device (stored in the operation history/setting information storage means 2, for example); and notification means (implemented by the notification means 6 and the display control means 7, for example) which notifies the user of the result of the judgment when the power saving possibility judgment means judges that electric power saving is possible (e.g., P7 shown in FIG. 2).

(2) The power saving notification system may comprise: usage time calculation means (implemented by the usage time calculation means 3, for example) which calculates usage time of the prescribed function (e.g., P2 shown in FIG. 2) based on the operation history information; and power saving effect calculation means which calculates the degree of power saving (e.g., P6 (POWER SAVING POSSIBILITY RATE) shown in FIG. 2) of each setting value settable in the prescribed function (e.g., P6 (ALL SETTING VALUES) shown in FIG. 2) in comparison with the current setting value based on the usage time calculated by the usage time calculation means. The power saving possibility judgment means may be configured to make the judgment on whether electric power saving is possible in the prescribed function compared to the current setting value or not based on the degree of power saving calculated by the power saving effect calculation means.

(3) In the power saving notification system, the power saving effect calculation means may be configured to calculate expected power consumption for each setting value of the prescribed function based on the usage time calculated by the usage time calculation means and power consumption per unit time previously determined for each setting value and then calculate the degree of power saving of each setting value by comparing the calculated expected power consumption with the expected power consumption at the current setting value.

(4) In the power saving notification system, the notification means may be configured to notify the user of the degree of power saving of each setting value calculated by the power saving effect calculation means (e.g., the step S23 shown in FIG. 4) together with the result of the judgment.

(5) In the power saving notification system, the power saving possibility judgment means may be configured to judge that electric power saving is possible in regard to the prescribed function on condition that the usage time calculated by the usage time calculation means is not 0 (e.g., the condition 1).

(6) In the power saving notification system, the power saving possibility judgment means may be configured to judge that electric power saving is possible in regard to the prescribed function on condition that a setting value having the highest degree of power saving as the result of the calculation by the power saving effect calculation means differs from the current setting value of the function (e.g., the condition 2).

(7) In the power saving notification system, the notification means may be configured to notify the user of the result of the judgment at prescribed periods (e.g., the step S21 shown in FIG. 4) or according to an operation by the user (e.g., the step S22 shown in FIG. 4).

While the present invention has been described above with reference to the exemplary embodiment and examples, the present invention is not to be restricted to the particular illustrative exemplary embodiment and examples. A variety of modifications understandable to those skilled in the art can be made to the configuration and details of the present invention within the scope of the present invention.

This application claims priority to Japanese Patent Application No. 2009-269863 filed on November 27, 2009, the entire disclosure of which is incorporated herein by reference.

### Industrial Applicability

The present invention is applicable to the purpose of saving the electric power in terminal devices.

## Claims

1. A power saving notification system comprising:
power saving possibility judgment means which judges whether electric power saving is possible in a prescribed function of a terminal device compared to a current setting value of the function or not based on operation history information on the terminal device; and
notification means which notifies the user of the result of the judgment when the power saving possibility judgment means judges that electric power saving is possible.

2. The power saving notification system according to claim 1, comprising:
usage time calculation means which calculates usage time of the prescribed function based on the operation history information; and
power saving effect calculation means which calculates the degree of power saving of each setting value settable in the prescribed function in comparison with the current setting value based on the usage time calculated by the usage time calculation means,
wherein the power saving possibility judgment means makes the judgment on whether electric power saving is possible in the prescribed function compared to the current setting value or not based on the degree of power saving calculated by the power saving effect calculation means.

3. The power saving notification system according to claim 2, wherein the power saving effect calculation means calculates expected power consumption for each setting value of the prescribed function based on the usage time calculated by the usage time calculation means and power consumption per unit time previously determined for each setting value and then calculates the degree of power saving of each setting value by comparing the calculated expected power consumption with the expected power consumption at the current setting value.

4. The power saving notification system according to claim 2 or 3, wherein the notification means notifies the user of the degree of power saving of each setting value calculated by the power saving effect calculation means together with the result of the judgment.

5. The power saving notification system according to any one of claims 1 - 4, wherein the power saving possibility judgment means judges that electric power saving is possible in regard to the prescribed function on condition that the usage time calculated by the usage time calculation means is not 0.

6. The power saving notification system according to any one of claims 1 - 5, wherein the power saving possibility judgment means judges that electric power saving is possible in regard to the prescribed function on condition that a setting value having the highest degree of power saving as the result of the calculation by the power saving effect calculation means differs from the current setting value of the function.

7. The power saving notification system according to any one of claims 1 - 6, wherein the notification means notifies the user of the result of the judgment at prescribed periods or according to an operation by the user.

8. A terminal device comprising:
power saving possibility judgment means which judges whether electric power saving is possible in a prescribed function of the terminal device compared to a current setting value of the function or not based on operation history information; and
notification means which notifies the user of the result of the judgment when the power saving possibility judgment means judges that electric power saving is possible.

9. The terminal device according to claim 8, comprising:
usage time calculation means which calculates usage time of the prescribed function based on the operation history information; and
power saving effect calculation means which calculates the degree of power saving of each setting value settable in the prescribed function in comparison with the current setting value based on the usage time calculated by the usage time calculation means,
wherein the power saving possibility judgment means makes the judgment on whether electric power saving is possible in the prescribed function compared to the current setting value or not based on the degree of power saving calculated by the power saving effect calculation means.

10. A power saving notification method comprising:
judging whether electric power saving is possible in a prescribed function of a terminal device compared to a current setting value of the function or not based on operation history information on the terminal device; and
notifying the user of the result of the judgment when electric power saving is judged to be possible.

11. The power saving notification method according to claim 10, comprising:
calculating usage time of the prescribed function based on the operation history information; and
calculating the degree of power saving of each setting value settable in the prescribed function in comparison with the current setting value based on the calculated usage time,
wherein the judgment on whether electric power saving is possible in the prescribed function compared to the current setting value or not is made based on the calculated degree of power saving.

12. A power saving notification program which causes a computer to execute:
a power saving possibility judgment process of judging whether electric power saving is possible in a prescribed function of a terminal device compared to a current setting value of the function or not based on operation history information on the terminal device; and
a notification process of notifying the user of the result of the judgment when electric power saving is judged to be possible in the power saving possibility judgment process.

13. The power saving notification program according to claim 12, wherein the program causes the computer to execute:
a usage time calculation process of calculating usage time of the prescribed function based on the operation history information; and
a power saving effect calculation process of calculating the degree of power saving of each setting value settable in the prescribed function in comparison with the current setting value based on the calculated usage time,
wherein the judgment in the power saving possibility judgment process on whether electric power saving is possible in the prescribed function compared to the current setting value or not is made based on the calculated degree of power saving.
